# EUROPÄISCHE PATENTSCHRIFT

(11) **EP 3 074 256 B1**
(45) Veröffentlichungstag und Bekanntmachung des Hinweises auf die Patenterteilung: **29.05.2019**
(21) Anmeldenummer: 14795961.3
(22) Anmeldetag: 11.11.2014
(51) Int. Cl.: B60K 6/40, B60K 6/405, B60K 6/48, B60K 6/52

(54) **ANTRIEBSVORRICHTUNG FÜR EIN HYBRIDGETRIEBENES KRAFTFAHRZEUG**
DRIVE DEVICE FOR A HYBRID-DRIVE MOTOR VEHICLE
DISPOSITIF D'ENTRAÎNEMENT POUR VÉHICULE AUTOMOBILE À PROPULSION HYBRIDE

(30) Priorität: 28.11.2013 DE 102013019901
(43) Veröffentlichungstag der Anmeldung: 05.10.2016
(73) Patentinhaber: Audi AG, 85045 Ingolstadt (DE)
(72) Erfinder: MEIXNER, Christian, 85049 Ingolstadt (DE)
(86) Internationale Anmeldenummer: PCT/EP2014/003020
(87) Internationale Veröffentlichungsnummer: WO 2015/078559

(56) Entgegenhaltungen:
- DE-A1- 4 211 586
- DE-A1-102007 036 098
- FR-A1- 2 766 133
- US-A1- 2003 148 843
- US-A1- 2011 118 072

## Beschreibung

Die vorliegende Erfindung betrifft ein hybridgetriebenes Kraftfahrzeug gemäß dem Oberbegriff des Patentanspruchs 1.

Eine Antriebsvorrichtung für ein hybridgetriebenes Kraftfahrzeug zeigt beispielsweise die DE 10 2007 036 098 A1, bei der eine Elektromaschine bei einem Standartantrieb für Kraftfahrzeuge in die von einem vorderen Wechselgetriebe bzw. dessen Abtriebswelle zu einem heckseitigen Achsdifferenzial geführte Kardanwelle integriert ist. In das Gehäuse der Elektromaschine ist ferner ein Reduzier-Planetengetriebe integriert, über das der auf einer Hohlwelle angeordnete Rotor der Elektromaschine auf die Kardanwelle abtreiben bzw. über diese als Generator wirkend angetrieben werden kann.

Aus der FR 2 766 133 A1 ist ein gattungsgemäßes hybridgetriebenes Kraftfahrzeug bekannt.

Die Aufgabe der Erfindung besteht darin, ein hybridgetriebenes Kraftfahrzeug bereitzustellen, dessen Antriebsvorrichtung größere konstruktive Freiheitsgrade bzw. universellere Einsatzbereiche ermöglicht.

Die Aufgabe ist durch die Merkmale des Patentanspruchs 1 gelöst. Vorteilhafte Weiterbildungen der Erfindung sind Gegenstand der abhängigen Ansprüche.

Erfindungsgemäß wird vorgeschlagen, dass die Elektromaschine als eigenständige Baueinheit im Kraftfahrzeug angeordnet und mit zumindest einer Verbindungswelle auf eine der Wellen des Wechselgetriebes geschaltet ist. Besonders bevorzugt kann die Elektromaschine dazu in einem Mittellängstunnel des Unterbodens des Kraftfahrzeugs positioniert sein. Die Baueinheit kann somit baulich günstig und gegebenen Anforderungen entsprechend auf das Wechselgetriebe geschaltet sein und damit verbunden gewünschte Übersetzungsverhältnisse im Wechselgetriebe nutzen. Die Elektromaschine kann alleine oder im Hybridbetrieb mit der Brennkraftmaschine das Kraftfahrzeug antreiben oder als Generator geschaltet im Rekuperationsbetrieb oder über die Brennkraftmaschine elektrische Energie erzeugen und/oder gegebenenfalls als Startermotor genutzt werden.

Dazu kann die Welle der Elektromaschine über eine Zahnradstufe mit der Verbindungswelle gekoppelt sein. Dies hat den Vorteil, dass die Elektromaschine desachsiert zur Verbindungswelle positioniert sein kann, was die Anordnung der Baueinheit innerhalb des Mittellängstunnels wesentlich begünstigt; zudem kann über die Zahnradstufe das Übersetzungsverhältnis von der Elektromaschine zur Getriebewelle gezielt verändert werden.

Ferner kann es zweckmäßig sein, wenn der Rotor der Elektromaschine und/oder die Zahnradstufe über eine in die Baueinheit integrierte Kupplung vom Wechselgetriebe abkoppelbar ist. Damit kann wirkungsgradgünstig bei nur verbrennungsmotorischem Betrieb des Kraftfahrzeugs die Elektromaschine stillgesetzt werden.

Erfindungsgemäß erfolgen bei einem Kraftfahrzeug mit frontseitigem Antriebsaggregat und Heckantrieb, bei dem die Abtriebswelle des Wechselgetriebes über eine Kardanwelle auf das hintere Achsdifferenzial abtreibt, der Kraftfluss zur Elektromaschine über die auf die Eingangswelle des Wechselgetriebes geschaltete Verbindungswelle und der Kraftfluss zur Kardanwelle über eine zweite, auf die Abtriebswelle des Wechselgetriebes geschaltete Verbindungswelle und eine Zwischenwelle, wobei die Zwischenwelle durch eine hohl ausgeführte Welle der Elektromaschine hindurch geführt ist. Die Elektromaschine treibt somit auf die Eingangswelle des Wechselgetriebes, während deren Abtriebswelle baulich günstig durch den Rotor der Elektromaschine hindurch das hintere Achsdifferenzial antreibt. Dabei kann zur Anpassung von Übersetzungsverhältnissen, aber insbesondere zur Erzielung günstiger Achsabstände der Wellen in der Baueinheit die mit der Abtriebswelle verbundene, zweite Verbindungswelle über eine zweite Zahnradstufe auf die Zwischenwelle wirken.

In vorteilhafter Weiterbildung der Erfindung kann ferner bei einem Allradantrieb des Kraftfahrzeugs mit zu einem vorderen Achsdifferenzial abtreibenden Wechselgetriebe der Kraftfluss von der hinteren, entgegengesetzten Abtriebswelle des Wechselgetriebes zum hinteren Achsdifferenzial mittels einer Kupplung abschaltbar sein. Damit kann der Allradantrieb sowohl im verbrennungsmotorischem Betrieb, im Hybridbetrieb und im elektromotorischem Betrieb abgeschaltet und das Kraftfahrzeug wirkungsgradgünstig nur mit Frontantrieb (zum Beispiel bei höheren Fahrzeug-Geschwindigkeiten) betrieben sein. Die Kupplung kann dabei bevorzugt in die Baueinheit mit der Elektromaschine integriert sein.

Schließlich wird insbesondere aus wirkungsgradtechnischen Gründen vorgeschlagen, dass die Kupplung zwischen der Elektromaschine und der ersten Verbindungswelle und/oder die Kupplung zwischen der zweiten Verbindungswelle und der Kardanwelle jeweils der korrespondierenden Zahnradstufe vorgeschaltet ist, so dass bei jeweils geöffneter Kupplung kein Kraftfluss bzw. Antriebsmoment über die Zahnradstufen und gegebenenfalls nachfolgende Getriebeelemente verläuft.

Mehrere Ausführungsbeispiele der Erfindung sind nachstehend anhand der beigefügten, schematischen Zeichnung näher erläutert.

Es zeigen:
- Fig. 1: in einer Draufsicht eine Antriebsvorrichtung eines frontgetriebenen Kraftfahrzeugs mit einer Brennkraftmaschine, einem Geschwindigkeits-Wechselgetriebe und einer über eine Verbindungswelle an das Wechselgetriebe angeschlossenen Baueinheit mit einer Elektromaschine;
- Fig. 2: die Baueinheit mit der Elektromaschine nach Fig. 1 als Blockschaltbild, bei der die Verbindungswelle mit der Eingangswelle des Wechselgetriebes verbunden ist, wobei die Baueinheit nicht von der Erfindung umfasst ist;
- Fig. 3: eine zur Fig. 2 alternative Baueinheit, bei der die Elektromaschine über umschaltbare Übersetzungsstufen auf die an die Abtriebswelle des Wechselgetriebes angeschlossene Verbindungswelle abtreibt, wobei die Baueinheit nicht von der Erfindung umfasst ist;
- Fig. 4: ein weiteres Blockschaltbild einer Baueinheit mit Elektromaschine, bei der über eine Zwischenwelle die Elektromaschine und eine abtreibende Kardanwelle für einen zusätzlichen Heckantrieb des Kraftfahrzeugs an die Abtriebswelle des Wechselgetriebes angekoppelt sind, wobei die Baueinheit nicht von der Erfindung umfasst ist;
- Fig. 5: eine von der Fig. 4 abweichende, erfindungsgemäße Ausgestaltung der Baueinheit, bei der die Elektromaschine über eine erste Verbindungswelle und die abtreibende Kardanwelle über eine zweite Verbindungswelle an die Eingangswelle und die Abtriebswelle des Wechselgetriebes angeschlossen sind;
- Fig. 6: eine zur Fig. 5 alternative, erfindungsgemäße Baueinheit mit zwei in die Baueinheit integrierten Kupplungen, mittels denen die Elektromaschine und die abtreibende Kardanwelle im Kraftfluss vor vorgelagerten Zahnradstufen abkoppelbar sind; und
- Fig. 7: eine weitere, zur Fig. 5 alternative, erfindungsgemäße Ausgestaltung der Baueinheit mit der Elektromaschine und zwei Verbindungswellen zum Wechselgetriebe, bei der die den Heckantrieb abschaltende Kupplung innerhalb des Wechselgetriebes auf der Abtriebswelle angeordnet ist.

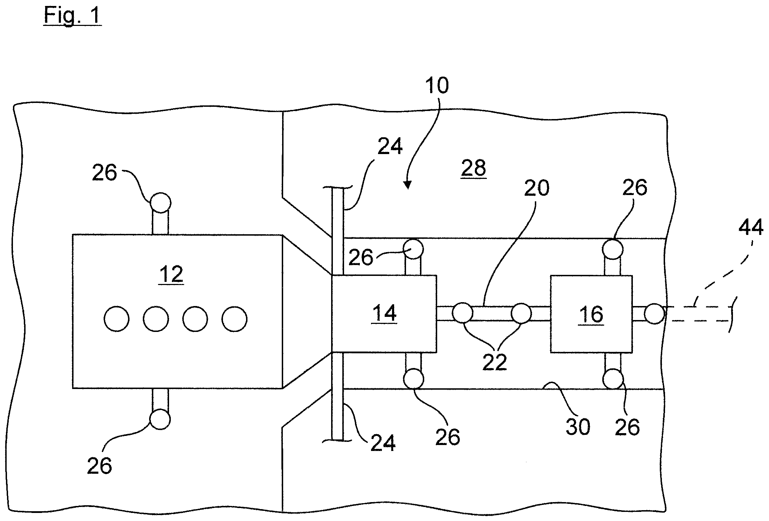

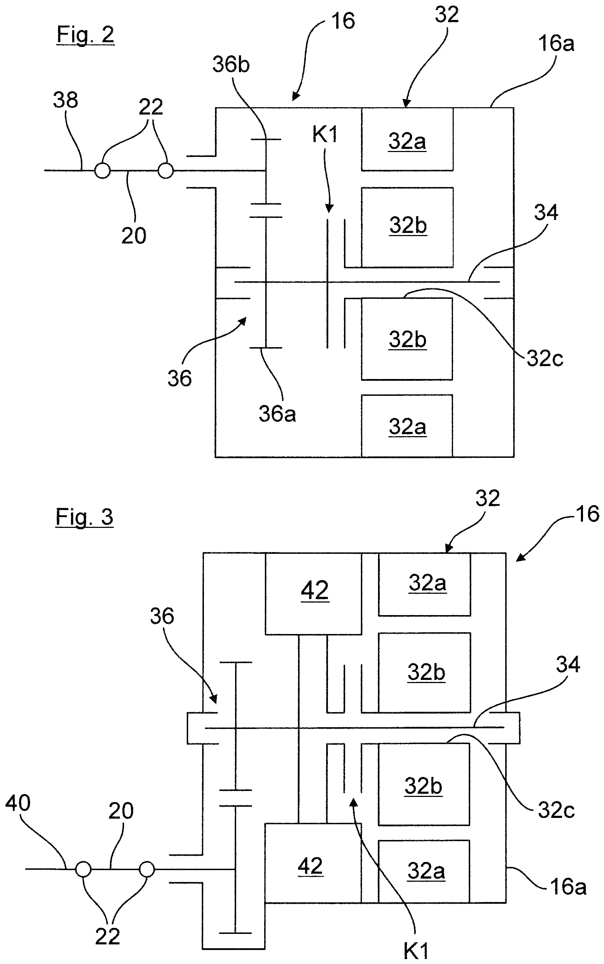

In der Fig. 1 ist in einer Draufsicht und grob schematisch eine Hybrid-Antriebsvorrichtung 10 für ein frontgetriebenes Kraftfahrzeug dargestellt, die sich im Wesentlichen aus einer Brennkraftmaschine 12, einem Geschwindigkeits-Wechselgetriebe 14 und einer, in einer eigenständigen Baueinheit 16 angeordneten Elektromaschine 32 (Fig. 2 und folgende) zusammensetzt. Die Brennkraftmaschine 12 und das Wechselgetriebe 14 können bekannter Bauart sein und sind deshalb nicht weiter beschrieben.

Die Baueinheit 16 ist trieblich über eine Verbindungswelle 20 mit dem Wechselgetriebe 14 verbunden, wobei in der Verbindungswelle 20 im Hinblick auf nicht fluchtende Wellen-Drehachsen Gelenke 22 vorgesehen sind. Innerhalb des Wechselgetriebes 14 ist im Ausführungsbeispiel in an sich bekannter Weise ein vorderes Achsdifferenzial integriert, das über Antriebswellen 24 die Vorderräder des Kraftfahrzeugs antreibt.

Die Brennkraftmaschine 12, das Wechselgetriebe 14 und die Baueinheit 16 sind über angedeutete Aggregataufhängungen 26 am Kraftfahrzeugaufbau befestigt, wobei die Baueinheit 16 innerhalb des am Unterboden 28 angeordneten Mittellängstunnels 30 positioniert ist.

Die Figuren 2 bis 4 betreffen Vergleichsformen, die nicht von der Erfindung umfasst sind: Die Fig. 2 zeigt als Blockschaltbild den Aufbau der Baueinheit 16, in deren Gehäuse 16a die Elektromaschine 32 mit einem ringförmigen Stator 32a und einem ringförmigen Rotor 32b angeordnet ist.

Der Rotor 32b weist dabei eine Hohlwelle 32c auf, die auf einer im Gehäuse 16a drehbar gelagerten Zwischenwelle 34 geführt ist und die eine Kupplung K1 (zum Beispiel eine hydraulisch gesteuerte Lamellenkupplung oder eine Synchronkupplung) trägt, über die der Rotor 32b an die Zwischenwelle 34 ankuppelbar ist.

Die Zwischenwelle 34 ist über eine integrierte Zahnradstufe 36 mit Zahnrädern 36a, 36b trieblich mit der Verbindungswelle 20 verbunden, die andererseits an die Eingangswelle 38 (nur angedeutet) des Wechselgetriebes 14 angeschlossen ist. Es sei bemerkt, dass dazu das Wechselgetriebe 14 entsprechend modifiziert ist, bzw. dass die besagte Eingangswelle 38 aus dem Getriebegehäuse 16a des Wechselgetriebes 14 nach hinten herausgeführt und über geeignete Anschlüsse (Steckverbindung oder Flansche) mit der Verbindungswelle 20 verbunden ist.

Gemäß der getriebetechnischen Auslegung der Baueinheit 16 kann über die Elektromaschine 32 bei geschlossener Kupplung K1 die Eingangswelle 38 des Wechselgetriebes 14 und über dessen innere Übersetzungsstufen und die integrierte Abtriebswelle die Vorderräder des Kraftfahrzeugs angetrieben werden. Als Generator geschaltet kann das Bordnetz bzw. die Traktionsbatterie des Kraftfahrzeugs im Rekuperationsbetrieb oder über die angekoppelte Brennkraftmaschine 12 mit elektrischer Energie versorgt werden. Ferner kann gegebenenfalls die Brennkraftmaschine 12 gestartet werden (Wechselgetriebe in Neutral geschaltet).

Ferner kann durch Öffnen der Kupplung K1 die Elektromaschine 32 von der Verbindungswelle 20 bzw. vom Wechselgetriebe 14 abgekoppelt werden.

Die Fig. 3 zeigt eine zur Fig. 2 alternative Ausgestaltung der Baueinheit 16. Funktionell gleiche Teile sind mit gleichen Bezugszeichen versehen. Die Beschreibung beschränkt sich zur Vermeidung von Wiederholungen auf die wesentlichen Unterschiede. Gleiches gilt auch für die weiter folgenden Figurenbeschreibungen.

Gemäß der Fig. 3 ist die Verbindungswelle 20 der Baueinheit 16 auf die nur angedeutete Abtriebswelle 40 des Wechselgetriebes 14 geschaltet, die dementsprechend aus dem Gehäuse des Wechselgetriebes 14 herausgeführt und mit Anschlussmitteln (Steckverzahnung oder Anschlussflansch) versehen ist.

Die Verbindungswelle 20 ist über die Zahnradstufe 36 trieblich mit der Zwischenwelle 34 verbunden, wobei die Zwischenwelle 34 nicht direkt (analog zur Fig. 2), sondern über eine zumindest zwei Übersetzungsstufen bildende Schaltvorrichtung 42 (dies kann zum Beispiel eine Doppelsynchronkupplung wie bei Schaltgetrieben bekannt oder ein Planetengetriebe sein) mit dem Rotor 32b der Elektromaschine 32 gekoppelt ist.

Über die zum Beispiel elektromechanisch umschaltbare Schaltvorrichtung 42 kann die Elektromaschine 32 bevorzugt zum Anfahren des Kraftfahrzeugs und im niedrigeren Geschwindigkeitsbereich in eine kürzere Übersetzung (höheres Drehmoment) und im höheren Geschwindigkeitsbereich in eine längere Übersetzung umgeschaltet werden. Im Übrigen ist die Funktion der Elektromaschine 32 wie zur Fig. 2 beschrieben, wobei über die Abtriebswelle 40 wiederum die Vorderräder des Kraftfahrzeugs über das in das Wechselgetriebe 14 integrierte Achsdifferenzial angetrieben sind.

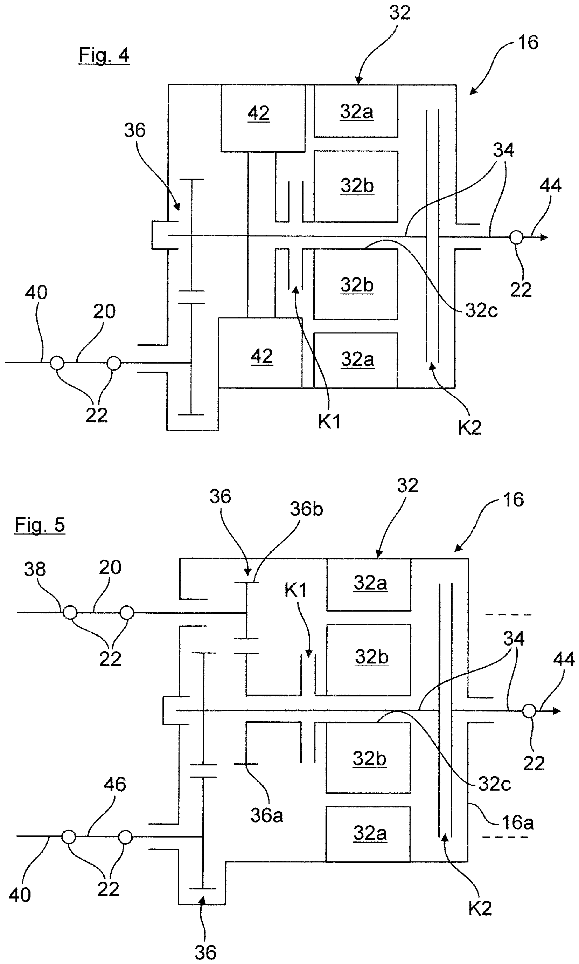

In der Fig. 4 ist eine Baueinheit 16 dargestellt, die im Wesentlichen von der Fig. 3 dadurch abweicht, dass die Zwischenwelle 34 über eine integrierte Kupplung K2 (dies kann bevorzugt eine hydraulisch gesteuerte Lamellenkupplung sein) aus dem Gehäuse 16a herausgeführt und mit einer Kardanwelle 44 (nur angedeutet) trieblich verbunden ist. Über die Kardanwelle 44 kann in bekannter Weise ein hinteres Achsdifferenzial bzw. können zusätzlich zu den Vorderrädern des Kraftfahrzeugs die Hinterräder angetrieben werden.

Der Hinterradantrieb kann über die Kupplung K2 abgeschaltet werden, wobei dies insbesondere bei höheren Fahrzeuggeschwindigkeiten aus Wirkungsgradgründen vorteilhaft ist. Alternativ könnte die Zuschaltung des Hinterradantriebs auch abhängig von Schlupfwerten an den Rädern des Kraftfahrzeugs oder anderweitig gesteuert sein.

Die Fig. 5 zeigt eine erfindungsgemäße Ausgestaltung der Baueinheit 16 mit dem wesentlichen Unterschied, dass hier die Elektromaschine 32 über eine erste Verbindungswelle 20 analog zur Fig. 2 auf die Eingangswelle 38 des Wechselgetriebes 14 geschaltet ist, während die Zwischenwelle 34 analog zur Fig. 4 mit der Abtriebswelle 40 des Wechselgetriebes 14 über eine zweite Verbindungswelle 46 trieblich verbunden ist.

Dabei treibt die Abtriebswelle 40 des Wechselgetriebes 14 über die Verbindungswelle 46 und die Zahnradstufe 36 auf die Zwischenwelle 34 und diese über die Kupplung K2 auf die Kardanwelle 44.

Die Eingangswelle 38 des Wechselgetriebes 14 hingegen ist über die Verbindungswelle 20 und ebenfalls eine axial versetzte Zahnradstufe 36 (die beiden Zahnradstufen 36 können in ihren Übersetzungen unterschiedlich sein) sowie über die Kupplung K1 mit dem Rotor 32b der Elektromaschine 32 gekoppelt.

Dabei sind das Zahnrad 36a der Zahnradstufe 36 und die Kupplung K1 wie die Hohlwelle 32c des Rotors 32b relativ zur Zwischenwelle 34 verdrehbar auf der Zwischenwelle 34 gelagert bzw. von dieser entkoppelt.

Daraus resultierend kann die Elektromaschine 32 wie zur Fig. 2 beschrieben auf die Eingangswelle 38 des Wechselgetriebes 14 abtreiben, während über die Abtriebswelle 40 und die entkoppelte Zwischenwelle 34 die Hinterräder des Kraftfahrzeugs antreibbar sind.

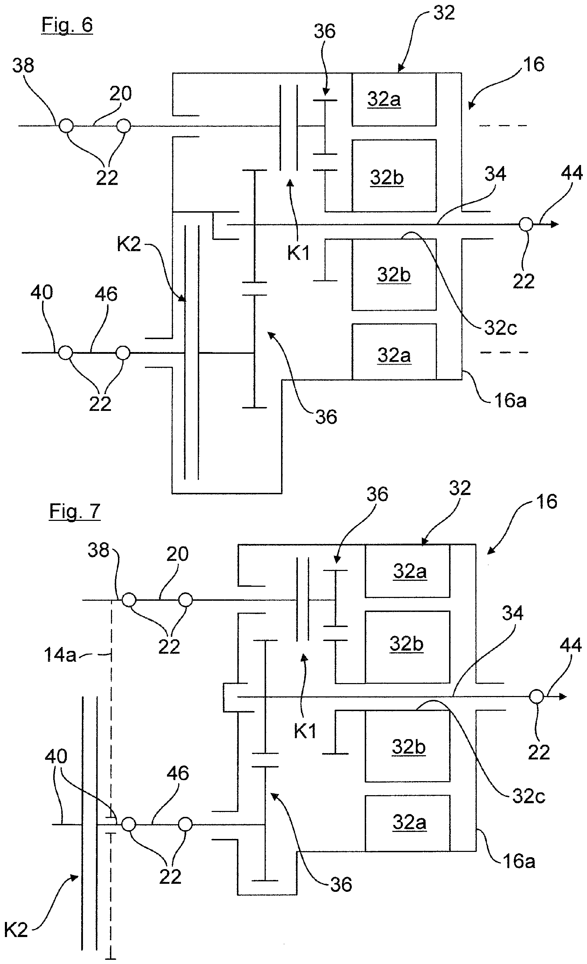

Die Fig. 6 und 7 zeigen zur Fig. 5 alternative, erfindungsgemäße Ausgestaltungen der Baueinheit 16, wobei hier die Anordnungen der Kupplungen K1 und K2 unterschiedlich ausgeführt sind.

So ist die Kupplung K1 in den Fig. 6 und 7 zwischen der Verbindungswelle 20 und der Zahnradstufe 36 angeordnet, so dass bei geöffneter Kupplung K1 der Kraftfluss zur Elektromaschine 32 unterbrochen ist bzw. kein Drehmoment oder Schleppmoment über die Zahnradstufe 36 auf die Elektromaschine 32 wirkt.

Des Weiteren ist gemäß Fig. 6 die Kupplung K2 zwischen der Verbindungswelle 46 und der korrespondierenden Zahnradstufe 36 innerhalb des Gehäuses 16a der Baueinheit 16 positioniert, womit ebenfalls bei geöffneter Kupplung K2 (abgeschaltete Hinterachse) die Zahnradstufe 36 entlastet ist.

Abweichend zur Fig. 6 kann gemäß Fig. 7 die Kupplung K2 (nur angedeutet) außerhalb der Baueinheit 16 innerhalb des Getriebegehäuses 14a des Wechselgetriebes 14 angeordnet sein und damit direkt den aus dem Getriebegehäuse 14a herausgeführten Abschnitt der Abtriebswelle 40 abkoppeln.

Die Baueinheit 16 kann innerhalb des Mittellängstunnels 30 (Fig. 1) bevorzugt so angeordnet sein, dass ein gegebenenfalls vorhandener Querträger oder Aggregatträger zu deren Befestigung nutzbar ist. Durch die getrennte Anordnung der Baueinheit 16 relativ zum Wechselgetriebe 14 ist eine laufruhige, schwingungsarme Anordnung erzielt, die zudem räumlich günstig am Unterboden des Kraftfahrzeugs und innerhalb des Mittellängstunnels 30 platzierbar ist.

## Patentansprüche

1. Hybridgetriebenes Kraftfahrzeug mit einer Antriebsvorrichtung mit einer Brennkraftmaschine (12), einem Geschwindigkeits-Wechselgetriebe (14) und einer dem Wechselgetriebe (14) nachgeschalteten Elektromaschine (32), wobei die Elektromaschine (32) in einer eigenständigen Baueinheit (16) im Kraftfahrzeug angeordnet ist und mit zumindest einer Verbindungswelle (20, 46) auf eine der Wellen (38, 40) des Wechselgetriebes (14) geschaltet ist, wobei das Kraftfahrzeug ein frontseitiges Antriebsaggregat und einen Heckantrieb aufweist, wobei eine Abtriebswelle (40) des Wechselgetriebes (14) über eine Kardanwelle (44) auf ein hinteres Achsdifferenzial abtreibt, und wobei der Kraftfluss zur Elektromaschine (32) über die auf die Eingangswelle (38) des Wechselgetriebes (14) geschaltete Verbindungswelle (20) und der Kraftfluss zur Kardanwelle (44) über eine zweite, auf die Abtriebswelle (40) des Wechselgetriebes (14) geschaltete Verbindungswelle (46) und eine Zwischenwelle (34) erfolgt, **dadurch gekennzeichnet, dass** die Zwischenwelle (34) durch eine hohl ausgeführte Welle (32c) der Elektromaschine (32) hindurch geführt ist.

2. Hybridgetriebenes Kraftfahrzeug nach Anspruch 1, **dadurch gekennzeichnet, dass** die Baueinheit (16) mit der Elektromaschine (32) im Mittellängstunnel (30) des Unterbodens (28) des Kraftfahrzeugs positioniert ist.

3. Hybridgetriebenes Kraftfahrzeug nach Anspruch 1 oder 2, **dadurch gekennzeichnet, dass** eine Welle (32c) der Elektromaschine (32) über eine Zahnradstufe (36) mit der Verbindungswelle (20) gekoppelt ist.

4. Hybridgetriebenes Kraftfahrzeug nach Anspruch 3, **dadurch gekennzeichnet, dass** der Rotor (32b) der Elektromaschine (32) und/oder die Zahnradstufe (36) über eine in die Baueinheit (16) integrierte Kupplung (K1) vom Wechselgetriebe (14) abkoppelbar ist.

5. Hybridgetriebenes Kraftfahrzeug nach einem der vorhergehenden Ansprüche, **dadurch gekennzeichnet, dass** die mit der Abtriebswelle (40) verbundene, zweite Verbindungswelle (46) über eine zweite Zahnradstufe (36) auf die Zwischenwelle (34) wirkt.

6. Hybridgetriebenes Kraftfahrzeug nach einem der vorhergehenden Ansprüche, **dadurch gekennzeichnet, dass** bei einem Allradantrieb des Kraftfahrzeugs mit zu einem vorderen Achsdifferenzial abtreibenden Wechselgetriebe (14) der Kraftfluss von einer hinteren Abtriebswelle (40) des Wechselgetriebes (14) zu einem hinteren Achsdifferenzial mittels einer Kupplung (K2) abschaltbar ist.

7. Hybridgetriebenes Kraftfahrzeug nach Anspruch 6, **dadurch gekennzeichnet, dass** die Kupplung (K2), mittels der der Kraftfluss von der hinteren Abtriebswelle (40) des Wechselgetriebes (14) zum hinteren Achsdifferenzial abschaltbar ist, in die Baueinheit (16) mit der Elektromaschine (32) integriert ist.

8. Hybridgetriebenes Kraftfahrzeug nach Ansprüchen 4 bis 6, **dadurch gekennzeichnet, dass** die Kupplung (K1) zwischen der Elektromaschine (32) und der ersten Verbindungswelle (20) und/oder die Kupplung (K2) zwischen der zweiten Verbindungswelle (46) und der Kardanwelle (44) jeweils der korrespondierenden Zahnradstufe (36) vorgeschaltet ist.

## Claims

1. Hybrid-powered motor vehicle having a drive device with an internal combustion engine (12), a speed-change variable speed transmission (14) and an electric motor (32) connected downstream of the variable speed transmission (14), wherein the electric motor (32) is arranged in an autonomous assembly (16) in the motor vehicle and is connected to at least one connecting shaft (20, 46) on one of the shafts (38, 40) of the variable speed transmission (14), wherein the motor vehicle has a front-side drive unit and a rear-wheel drive, wherein an output shaft (40) of the variable speed transmission (14) outputs to a rear axle differential via a cardan shaft (44), and wherein the power flow to the electric motor (32) takes place via the connecting shaft (20) connected to the input shaft (38) of the transmission (14) and the power flow to the cardan shaft (44) takes place via a second, connecting shaft (46) connected to the output shaft (40) of the variable speed transmission (14) and the intermediate shaft (34), **characterised in that** the intermediate shaft (34) is guided through a hollow shaft (32c) of the electric motor (32).

2. Hybrid-powered motor vehicle according to claim 1, **characterised in that** the assembly (16) with the electric motor (32) is positioned in the central longitudinal tunnel (30) of the underbody (28) of the motor vehicle.

3. Hybrid-powered motor vehicle according to claim 1 or 2, **characterised in that** a shaft (32c) of the electric motor (32) is coupled to the connecting shaft (20) via a gear stage (36).

4. Hybrid-powered motor vehicle according to claim 3, **characterised in that** the rotor (32b) of the electric motor (32) and/or the gear stage (36) can be decoupled from the variable speed transmission (14) via a coupling (K1) integrated into the assembly (16).

5. Hybrid-powered motor vehicle according to any one of the preceding claims, **characterised in that** the second connecting shaft (46) connected to the output shaft (40) acts on the intermediate shaft (34) via a second gear stage (36).

6. Hybrid-powered motor vehicle according to any one of the preceding claims, **characterised in that** in an all-wheel drive of the motor vehicle with variable speed transmission (14) outputting to a front axle differential, the power flow from a rear output shaft (40) of the variable speed transmission (14) to a rear axle differential can be switched off by means of a coupling (K2).

7. Hybrid-powered motor vehicle according to claim 6, **characterised in that** the coupling (K2), by means of which the power flow from the rear output shaft (40) of the variable speed transmission (14) to the rear axle differential can be switched off, is integrated into the assembly (16) with the electric motor (32).

8. Hybrid-powered motor vehicle according to claims 4 to 6, **characterised in that** the coupling (K1) between the electric motor (32) and the first connecting shaft (20) and/or the coupling (K2) between the second connecting shaft (46) and the cardan shaft (44) is respectively connected upstream of the corresponding gear stage (36).

## Revendications

1. Véhicule automobile hybride avec un dispositif d'entraînement moteur avec un moteur à combustion interne (12), une boîte de vitesses (14) et un moteur électrique (32) monté en aval de la boîte de vitesses (14), dans lequel le moteur électrique (32) est agencé dans un élément autonome (16) dans le véhicule automobile et est commuté avec au moins un arbre de liaison (20, 46) sur un des arbres (38, 40) de la boîte de vitesses (14), dans lequel le véhicule automobile présente un groupe d'entraînement côté avant et un entraînement arrière, dans lequel un arbre de sortie (40) de la boîte de vitesses (14) sort sur un différentiel d'axe arrière par le biais d'un arbre à cardan (44), et dans lequel le flux de force vers le moteur électrique (32) a lieu par le biais de l'arbre de liaison (20) commuté sur l'arbre d'entrée (38) de la boîte de vitesses (14) et le flux de force vers l'arbre à cardan (44) a lieu par le biais d'un deuxième arbre de liaison (46) commuté sur l'arbre de sortie (40) de la boîte de vitesses (14) et un arbre intermédiaire (34), **caractérisé en ce que** l'arbre intermédiaire (34) est guidé à travers un arbre réalisé creux (32c) du moteur électrique (32).

2. Véhicule automobile hybride selon la revendication 1, **caractérisé en ce que** l'élément (16) est positionné avec le moteur électrique (32) dans le tunnel longitudinal médian (30) du bas de caisse (28) du véhicule automobile.

3. Véhicule automobile hybride selon la revendication 1 ou 2, **caractérisé en ce qu'**un arbre (32c) du moteur électrique (32) est couplé à l'arbre de liaison (20) par le biais d'un rapport d'engrenage (36).

4. Véhicule automobile hybride selon la revendication 3, **caractérisé en ce que** le rotor (32b) du moteur électrique (32) et/ou le rapport d'engrenage (36) peut être découplé de la boîte de vitesses (14) par le biais d'une liaison (K1) intégrée dans l'élément (16).

5. Véhicule automobile hybride selon l'une quelconque des revendications précédentes, **caractérisé en ce que** le deuxième arbre de liaison (46) relié à l'arbre de sortie (40) agit sur l'arbre intermédiaire (34) par le biais d'un deuxième rapport d'engrenage (36).

6. Véhicule automobile hybride selon l'une quelconque des revendications précédentes, **caractérisé en ce que** dans une transmission intégrale du véhicule automobile avec boîte de vitesses (14) sortant sur un différentiel d'axe avant, le flux de force d'un arbre de sortie arrière (40) de la boîte de vitesses (14) vers un différentiel d'axe arrière peut être arrêté au moyen d'une liaison (K2).

7. Véhicule automobile hybride selon la revendication 6, **caractérisé en ce que** la liaison (K2), au moyen de laquelle le flux de force de l'arbre de sortie (40) arrière de la boîte de vitesses (14) vers le différentiel d'axe arrière peut être arrêté, est intégrée dans l'élément (16) avec le moteur électrique (32).

8. Véhicule automobile hybride selon les revendications 4 à 6, **caractérisé en ce que** la liaison (K1) entre le moteur électrique (32) et le premier arbre de liaison (20) et/ou la liaison (K2) entre le deuxième arbre de liaison (46) et l'arbre à cardan (44) est respectivement montée en amont du rapport d'engrenage (36) correspondant.
